# DEMANDE DE BREVET EUROPEEN

(11) **EP 0 921 419 A1**
(43) Date de publication de la demande: **09.06.1999**
(21) Numéro de dépôt: 98403031.2
(22) Date de dépôt: 03.12.1998
(51) Int. Cl.: G02B 5/22

(54) **Revêtement absorbeur de lumière à haut pouvoir absorbant**

(30) Priorité: 08.12.1997 FR 9715482
(71) Demandeur: COMMISSARIAT A L'ENERGIE ATOMIQUE, 75015 Paris Cédex 15 (FR)
(72) Inventeur: Quesnel, Etienne, 38240 Meylan (FR); Chaton, patrick, 38570 Theys (FR)
(74) Mandataire: Dubois-Chabert, Guy

(57) **Abrégé**

Ce revêtement comprend au moins une couche de métal mince, optiquement discontinue (8), absorbante dans un domaine spectral déterminé contenu dans le domaine visible-proche infrarouge, et au moins une couche diélectrique (10), transparente dans ce domaine et formée sur la couche mince. Application à l'imagerie.

## Description

### DOMAINE TECHNIQUE

La présente invention concerne un revêtement absorbeur de lumière.

Il s'agit d'un revêtement mince et multicouche, ayant une fonction d'absorbeur dans le domaine spectral visible et/ou proche infrarouge.

L'invention s'applique notamment à l'imagerie, pour limiter les réflexions parasites et améliorer la séparation des différents canaux de détection, aux écrans de visualisation et aux disques optiques où le revêtement a pour fonction d'améliorer le contraste.

L'invention s'applique tout particulièrement :
- aux systèmes optiques destinés à des applications spatiales,
- à l'imagerie de haute précision (télémétrie),
- à la visualisation à l'aide d'écrans plats à cristaux liquides ou à micropointes (« microtips »), et
- à la télévision de haute définition.

### ÉTAT DE LA TECHNIQUE ANTÉRIEURE

Une méthode connue pour réaliser un revêtement absorbant (dans le domaine visible - proche infrarouge) consiste à piéger au maximum la lumière qui pénètre dans le revêtement et à limiter le plus possible le taux de lumière réfléchie.

Dans la plupart des cas, on limite les réflexions parasites en déposant, sur une couche absorbante, une couche antireflet (AR) à large bande spectrale.

La structure globale ainsi réalisée peut, si nécessaire, être rendue symétrique de manière à limiter les réflexions de la lumière, qu'elle arrive du côté du substrat ou du côté de l'air.

Selon les performances souhaitées, on rencontre essentiellement trois catégories de structures :
1) les structures de type substrat/couche absorbante/air,
2) les structures de type substrat/couche absorbante/couche AR/air, et
3) les structures de type substrat/couche AR/couche absorbante/couche AR/air.

Pour limiter la transmission optique de ces structures, on peut déposer au préalable sur le substrat une couche métallique opaque très réfléchissante.

La réalisation d'une couche absorbante, souvent appelée « matrice noire » (« black matrix »), fait appel à des techniques et à des matériaux extrêmement variés.

La méthode de réalisation la plus courante consiste à utiliser une couche de base (en polymère, en résine ou en verre) dans laquelle on introduit des pigments absorbants.

Ces pigments absorbants peuvent être, par exemple, des composés à base d'un oxyde de fer, d'aluminate de cobalt ou de graphite.

Les techniques utilisées pour déposer une telle couche absorbante composite procèdent très souvent du laminage.

Il existe néanmoins d'autres méthodes telles que l'électrodéposition, le dépôt sous vide, voire l'oxydation anodique, la calcination ou le recuit par laser pour favoriser l'absorption de surface.

On connaît notamment les couches absorbantes de chrome noir, obtenues par électrodéposition à partir d'un bain électrolytique dont la composition est ajustée pour garantir la coloration noire.

A ce sujet on se reportera au document 1 qui, comme les autres documents cités par la suite, est mentionné à la fin de la présente description.

Considérons plus particulièrement les techniques de dépôt sous vide.

Dans ce cas, les couches absorbantes sont généralement insérées dans une structure interférentielle de couches minces et empilées, à base de matériaux diélectriques, de type oxyde notamment.

On retrouve alors des structures du type 2) ou du type 3).

La fonction antireflet peut classiquement être réalisée par une multicouche comprenant une succession de couches diélectriques dont les indices optiques n sont alternativement haut et bas.

Pour ce faire on utilise par exemple des couches de TiO₂(n environ égal à 2,4) et des couches de SiO₂(n environ égal à 1,5) ou de MgF₂ (n environ égal à 1,39).

Les épaisseurs de ces couches, de l'ordre de quelques dixièmes de micromètres, et leur empilement déterminent la largeur spectrale et la longueur d'onde centrale de la bande ou de la fonction anti-reflet.

Pour ce qui concerne la réalisation des couches absorbantes proprement dites, plusieurs solutions ont été proposées.

Les couches absorbantes se composent souvent d'oxydes qui sont naturellement absorbants ou que l'on rend absorbants en y créant, lors du dépôt, une déficience en oxygène (oxydes sous-stoechiométriques).

Les composés intrinsèquement absorbants peuvent être, par exemple, les oxydes d'indium, de tungstène, de chrome ou d'étain (voir le document 2) ou encore de vanadium.

Parmi ces différents composés, on remarque en particulier que les oxydes CrO₂, In₂O et SnO sont noirs.

Pour ce qui est des oxydes sous-stoechiométriques, la plupart des composés qui, sous leur forme stable, sont transparents, peuvent devenir absorbants si l'on fait en sorte qu'ils contiennent des lacunes d'oxygène.

C'est le cas par exemple des oxydes de nickel NiOₓ préconisés dans le document 3, qui sont insérés dans une double structure antireflet du type TiO₂/SiO₂/NiOₓ/TiO₂/SiO₂.

Citons également la structure proposée dans le document 4, qui est composée de l'empilement multicouche Cr/diélectrique absorbant/couche AR.

La couche absorbante est alors composée préférentiellement d'oxyde de manganèse ou encore d'oxyde de chrome ou de fer, voire de silice contenant du chrome dispersé.

D'autres matériaux tels que les nitrures (TiN et ZrN mentionnés dans le document 3) peuvent également constituer des couches absorbantes intéressantes.

Il est bien connu, en particulier, que les couches de nitrure de titane TiNₓ offrent une large palette de couleurs, du vert bronze au jaune d'or, selon la valeur de x.

Signalons également l'utilisation de matériaux absorbants plus exotiques tels que le composé SiGe (voir le document 5).

Il convient aussi de citer l'empilement absorbant Cr/Cr₂O₃/Cr/Cr₂O₃ qui est utilisé pour améliorer le contraste des écrans à cristaux liquides (voir le document 6) et dont les couches ont des épaisseurs allant de 10 nm à quelques dizaines de nanomètres.

Pour absorber la lumière, on utilise ainsi généralement des matériaux plus ou moins absorbants dont le coefficient d'extinction k reste néanmoins, dans la plupart des cas, inférieur ou égal à environ 10⁻¹ dans le domaine visible - proche infrarouge (k étant de l'ordre de 10⁻⁴ à 10⁻⁵ pour un diélectrique transparent).

Dans ce cas, si l'on souhaite réaliser une couche ayant une absorption quasi-totale, il faut recourir à une couche dont l'épaisseur vaut au moins 1 µm et la doter de couches antireflets pour limiter les réflexions à l'interface air/couche.

En vue de maximiser l'absorption un meilleur résultat devrait pouvoir être obtenu en utilisant une structure absorbante formée de N couches de Cr qui alternent avec N couches de Cr₂O₃ étant donné le fort coefficient d'extinction k du chrome (k étant égal à 4 dans le domaine visible).

L'absorption dans le domaine visible d'au moins 95% de la lumière incidente nécessite alors l'empilement de plusieurs paires Cr/Cr₂O₃ (N>2), d'où une épaisseur totale de chrome et d'oxyde de chrome d'au moins 100 nm à 200 nm.

Plus l'absorption recherchée est proche de 100% plus l'épaisseur de cette structure doit augmenter.

La limitation de la performance vient alors des problèmes de tenue mécanique.

Il est bien connu, en effet, que le chrome en couche mince fait partie des métaux les plus contraints, ce qui limite son épaisseur à typiquement 200 nm (voir le document 7).

Au-delà de cette épaisseur, la couche se craquèle et se décolle.

La garantie d'une stabilité mécanique de l'absorbeur nécessite donc d'utiliser une structure multicouche aussi fine que possible ainsi que des matériaux peu contraints.

### EXPOSÉ DE L'INVENTION

La présente invention a pour but de concevoir un revêtement multicouche à haut pouvoir absorbant (absorption de plus de 95% de la lumière) dans le domaine visible - proche infrarouge tout en minimisant les risques d'instabilité mécanique liés aux contraintes dans les couches de ce revêtement absorbeur.

Pour ce faire, l'invention utilise une structure multicouche absorbante qui intègre, en tant qu'élément d'absorption, au moins une couche métallique mince, présentant la particularité d'être optiquement discontinue.

Comme on le verra dans les exemples donnés plus loin, ceci permet notamment de limiter l'épaisseur globale de l'absorbeur à moins de 200 nm tout en garantissant une absorption comprise entre 97% et 99% dans le domaine visible - proche infrarouge.

De façon précise, la présente invention a pour objet un revêtement absorbeur de lumière dans un domaine spectral déterminé, contenu dans le domaine visible-proche infrarouge, ce revêtement étant formé sur un substrat et caractérisé en ce qu'il comprend :
- au moins une couche de métal mince, qui est absorbante dans ce domaine spectral déterminé, et
- au moins une couche diélectrique, qui est transparente dans ce domaine spectral déterminé, cette couche diélectrique étant formée sur cette couche de métal mince,
et en ce que cette couche de métal mince est optiquement discontinue c'est-à-dire que son indice de réfraction et son coefficient d'extinction sont respectivement supérieur à l'indice de réfraction et inférieur au coefficient d'extinction du métal à l'état massif (« bulk state »), dans ce domaine spectral déterminé.

Par « métal à l'état massif », on entend une couche très épaisse de ce métal, ayant une épaisseur au moins égale à 1 µm.

Selon un mode de réalisation particulier du revêtement objet de l'invention, permettant de renforcer l'absorption de ce revêtement, ce revêtement comprend au moins deux couches de métal minces, optiquement discontinues, la couche diélectrique étant formée sur celle de ces deux couches de métal minces qui est la plus éloignée du substrat.

Le revêtement objet de l'invention peut comprendre en outre, entre le substrat et la couche de métal mince la plus proche de ce substrat, une couche de métal épaisse, optiquement continue.

Dans ce domaine spectral déterminé l'indice de réfraction et le coefficient d'extinction de cette couche épaisse sont alors respectivement sensiblement égal à l'indice de réfraction et sensiblement égal au coefficient d'extinction du métal correspondant dans l'état massif.

Cette couche de métal optiquement continue formée sur le substrat a pour fonction d'empêcher la transmission de la lumière et de réfléchir celle-ci vers la ou les couches absorbantes.

Lorsque cette couche de métal optiquement continue est en aluminium, un coefficient de transmission inférieur à 10⁻³ dans le domaine visible nécessite une épaisseur d'aluminium au moins égale à 50 nm.

Il est possible de réaliser un revêtement conforme à l'invention qui soit « symétrique » pour assurer la même fonction optique du côté du substrat et du côté de l'air : un revêtement conforme à l'invention peut comprendre successivement, à partir du substrat, une première couche diélectrique, une première couche de métal mince, optiquement discontinue, une deuxième couche diélectrique, une couche de métal épaisse, optiquement continue, une deuxième couche de métal mince, optiquement discontinue, et une troisième couche diélectrique.

Le métal de la couche de métal épaisse, optiquement continue, est de préférence un métal M ayant un oxyde MₓO_{y} qui est transparent dans le domaine spectral déterminé.

Ce métal de la couche de métal épaisse, optiquement continue, peut être choisie dans le groupe comprenant le titane, le hafnium, le chrome et le niobium mais on utilise de préférence l'aluminium dont le coefficient d'extinction k est élevé (de l'ordre de 5 à 8 dans le domaine visible).

Dans un revêtement conforme à l'invention chaque couche diélectrique peut être choisie parmi les couches d'oxydes qui sont diélectriques et transparents dans le domaine spectral déterminé.

Cependant, si l'application l'exige, d'autres composés que ces oxydes peuvent être utilisés.

On peut par exemple utiliser des fluorures diélectriques et transparents dans le domaine spectral déterminé.

Selon un mode de réalisation de l'invention, préféré pour ses performances, chaque couche mince, optiquement discontinue, est une couche d'aluminium dont l'épaisseur est sensiblement égale ou inférieure à 15 nm, le revêtement comprenant en outre une couche d'alumine sur laquelle est formée cette couche mince, optiquement discontinue.

Il convient de noter que le choix de l'empilement à réaliser pour obtenir un revêtement conforme à l'invention dépend de la largeur de bande spectrale où l'on souhaite un maximum d'absorption.

Ce choix dépend également du niveau de réflexion résiduelle qui est tolérée dans l'application visée.

L'une des particularités de la présente invention est donc que les performances optiques du revêtement sont ajustables selon les exigences requises.

Dans le cas du mode de réalisation préféré mentionné plus haut on peut réaliser un revêtement conforme à l'invention du type :
substrat/couche de métal optiquement continue/couche
d'alumine/couche d'aluminium optiquement
discontinue/couche diélectrique.

Pour renforcer l'absorption optique on peut également réaliser un revêtement conforme à l'invention du type :
substrat/couche de métal optiquement continue/couche
d'alumine/couche d'aluminium optiquement
discontinue/... /couche d'alumine/couche d'aluminium
optiquement discontinue/couche diélectrique
dans lequel le motif couche/d'alumine/couche d'aluminium optiquement discontinue est répété au moins deux fois.

On peut également réaliser un revêtement conforme à l'invention à structure « symétrique » du type :
substrat/couche diélectrique/couche d'alumine/couche
d'aluminium optiquement discontinue/couche
diélectrique/couche de métal optiquement
continue/couche d'alumine/couche d'aluminium
optiquement discontinue/couche diélectrique.

La réalisation de revêtements conformes à l'invention se fait de préférence par dépôt sous vide des couches.

Les épaisseurs typiques de ces couches sont de quelques nanomètres pour une couche d'aluminium optiquement discontinue et de quelques dizaines ou quelques centaines de nanomètres pour chaque couche diélectrique telle que Al₂O₃ ou pour chaque couche de métal optiquement continue.

La maîtrise de faibles épaisseurs de métal nécessite l'utilisation d'une technique de dépôt à vitesse lente et stable.

En particulier la pulvérisation ionique (cathodique ou par faisceau d'ion est une méthode bien adaptée à l'invention.

L'avantage de recourir à une structure homogène absorbante « couche d'alumine/couche d'aluminium optiquement discontinue » est que cela permet le passage de la couche métallique à la couche d'oxyde uniquement par l'introduction d'oxygène dans l'enceinte dans laquelle on forme le revêtement.

Dans ce cas le dispositif de dépôt des couches est particulièrement simple puisqu'il ne comporte qu'une cible de pulvérisation métallique placée dans une enceinte à vide dans laquelle on effectue successivement des pulvérisations dans une atmosphère de gaz rare ou dans un mélange de gaz rare et d'oxygène.

L'une des originalités de la présente invention réside dans l'utilisation d'une ou d'une pluralité de couches de métal minces, optiquement discontinues, dont les constantes optiques n et k sont tout à fait anormales vis-à-vis de celles du métal massif ou de celles d'une couche épaisse de ce métal (qui sont peu différentes de celles du métal massif).

Pour les constantes optiques relatives à une couche épaisse d'aluminium on se référera au document 8.

L'utilisation d'au moins une couche de métal mince optiquement discontinue induit une très forte absorption qui est nettement plus élevée que si l'on utilisait une couche métallique optiquement continue.

Un autre avantage d'un revêtement conforme à l'invention est sa faible épaisseur.

L'utilisation préférentielle d'aluminium et d'alumine limite de plus les contraintes mécaniques dans les couches du revêtement.

En conséquence on obtient une structure parfaitement adhérente qui peut subir sans détérioration des traitements postérieurs.

Il est par exemple possible de réaliser par gravure ionique ou gravure de type « lift-off » des ouvertures dans le revêtement et de délimiter ainsi des diaphragmes localisés.

Des traitements thermiques sont également réalisables jusqu'à des températures de l'ordre de 300°C à 400°C sans modification notable de la fonction d'absorption, l'alumine jouant le rôle d'une barrière de diffusion.

Un autre avantage qui découle de la faible épaisseur d'un revêtement conforme à l'invention est la limitation de la diffusion de surface qui est typiquement inférieure à 1% dans le domaine visible.

Ceci est important lorsqu'il s'agit de limiter la lumière parasite dans les systèmes optiques.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 représente des valeurs de l'indice de réfraction en fonction de l'épaisseur, pour une longueur d'onde donnée, pour une couche de métal optiquement discontinue et pour une couche optiquement continue du même métal,
- la figure 2 représente des valeurs du coefficient d'extinction en fonction de l'épaisseur pour une longueur d'onde donnée, pour une couche de métal optiquement discontinue et pour une couche optiquement continue du même métal,
- la figure 3 représente des valeurs de l'indice de réfraction en fonction de la longueur d'onde, pour des épaisseurs de métal données,
- la figure 4 représente des valeurs du coefficient d'extinction en fonction de la longueur d'onde, pour des épaisseurs de métal données, et
- les figures 5 à 8 sont des vues en coupe transversale schématiques et partielles de revêtement absorbeurs conformes à l'invention.

### EXPOSÉ DÉTAILLÉ DE MODES DE RÉALISATION PARTICULIERS

En considérant l'exemple préféré d'une couche d'aluminium, mince, optiquement discontinue, la discontinuité de celle-ci se traduit, à une longueur d'onde donnée, par un indice de réfraction n très supérieur à celui de l'aluminium massif.

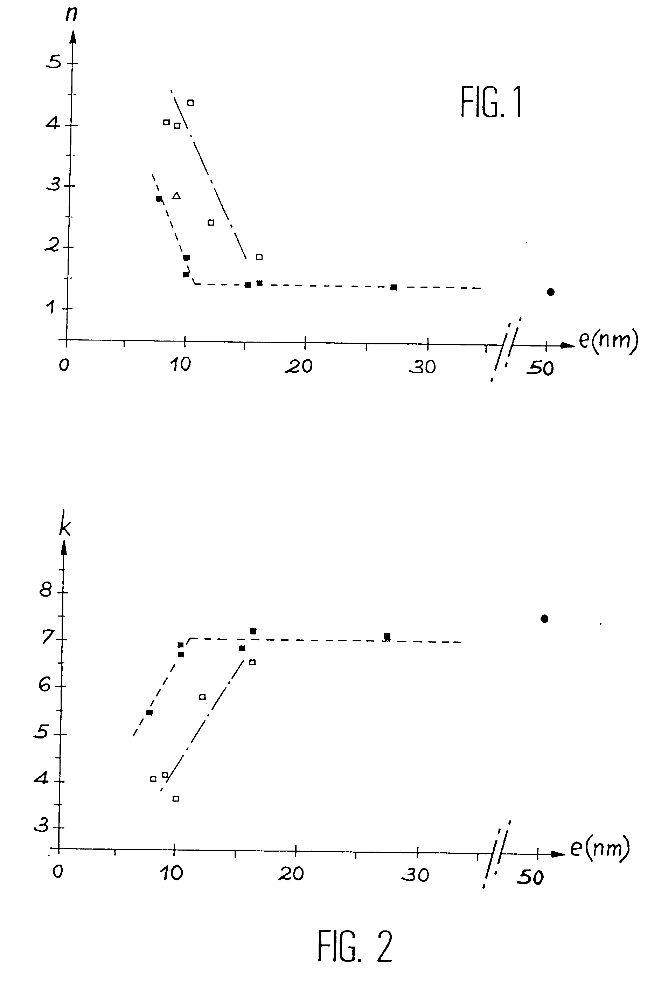

La figure 1 montre les variations de l'indice de réfraction n d'une couche d'aluminium en fonction de l'épaisseur e de cette couche pour la longueur d'onde 632,8 nm.

Les carrés noirs correspondent à une couche d'aluminium sur un substrat en verre de type BK7 et les carrés blancs correspondent à une couche d'aluminium sur une couche d'alumine, elle-même formée sur un substrat en verre de type BK7.

Le rond noir correspond à l'indice de réfraction d'une couche épaisse d'aluminium opaque, d'épaisseur e>50 nm (voir le document 8).

On voit que la discontinuité optique apparaît pour une épaisseur donnée qui peut varier avec la nature du substrat ou de la couche sur laquelle est formée la couche optiquement discontinue.

Si l'aluminium est déposé sur du verre la couche d'aluminium est optiquement continue au-delà d'une épaisseur de 10 nm.

Si l'aluminium est déposé sur une couche d'alumine, elle-même déposée sur une couche de verre, la couche d'aluminium devient optiquement discontinue en-deçà de 15 nm.

Autrement dit la formation de la couche d'aluminium sur une couche d'alumine favorise la discontinuité optique de la couche d'aluminium.

Sur la figure 1 le triangle blanc correspond à une couche d'aluminium formée sur une couche de TiO₂, elle-même formée sur un substrat en verre de type BK7.

On voit que l'indice de réfraction correspondant est très proche de celui d'une couche d'aluminium de même épaisseur, formée sur le verre.

Pour obtenir un revêtement fortement absorbant conforme à l'invention, avec une couche d'aluminium déposée sur une couche d'un oxyde tel que SiO₂, TiO₂, AlO₂ ou Cr₂O₃, il faut donner à cette couche d'aluminium une épaisseur ne dépassant pas 10 nm.

La figure 2 montre les variations du coefficient d'extinction k en fonction de l'épaisseur e pour une couche d'aluminium, à la longueur d'onde 632,8 nm.

Les carrés noirs correspondent encore à une couche d'aluminium sur un substrat en verre de type BK7 et les carrés blancs à une couche d'aluminium sur une couche d'alumine, elle-même formée sur un substrat en verre de type BK7.

Le rond noir correspond au coefficient d'extinction d'une couche épaisse d'aluminium opaque, d'épaisseur e> 50 nm (voir le document 8).

On constate l'effondrement du coefficient d'extinction de la couche d'aluminium lorsque celle-ci devient optiquement discontinue.

Ce coefficient k devient alors très inférieur à celui de l'aluminium massif.

On précise que les mesures de n et k ont été réalisées par la technique de plasmon de surface au sujet de laquelle on consultera le document 9.

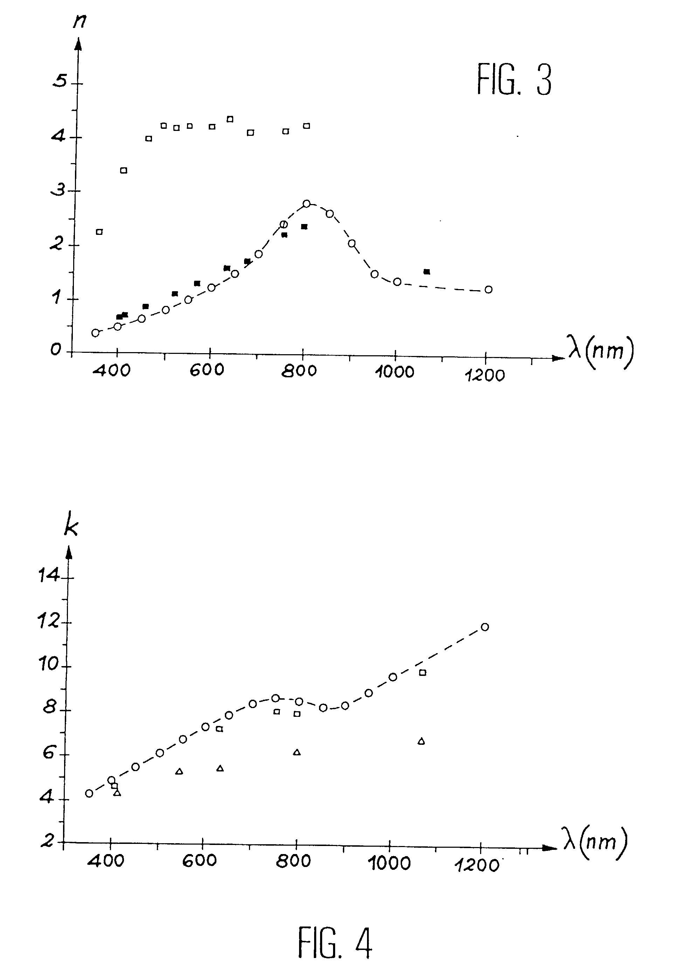

La figure 3 montre les variations de l'indice de réfraction n de couches d'aluminium en fonction de la longueur d'onde *λ* dans le domaine spectral allant de 300 nm à 1300 nm.

Les ronds blancs correspondent à une couche d'aluminium d'épaisseur supérieure à 50 nm (les valeurs correspondantes sont données dans le document 8), les carrés noirs correspondent à une couche d'aluminium de 10 nm d'épaisseur formée sur un substrat en verre de type BK7 et les carrés blancs correspondent à une couche d'aluminium de 10 nm d'épaisseur formée sur une couche d'alumine de 100 nm d'épaisseur, elle-même formée sur un substrat en verre de type BK7.

La figure 4 montre les variations du coefficient d'extinction k de couches d'aluminium déposées sur une couche de verre de type BK7 en fonction de la longueur d'onde λ, dans le même domaine spectral (300 nm à 1300 nm).

Les ronds blancs correspondent à une couche d'aluminium d'épaisseur e> 50 nm (document 8), les carrés blancs correspondent à une couche d'aluminium de 27 nm d'épaisseur et les triangles blancs correspondent à une couche d'aluminium de 7,5 nm qui apparaît optiquement discontinue.

L'écart important de l'indice de réfraction et du coefficient d'extinction par rapport à l'aluminium massif (ou à une couche épaisse d'aluminium) se vérifie sur tout le domaine spectral considéré.

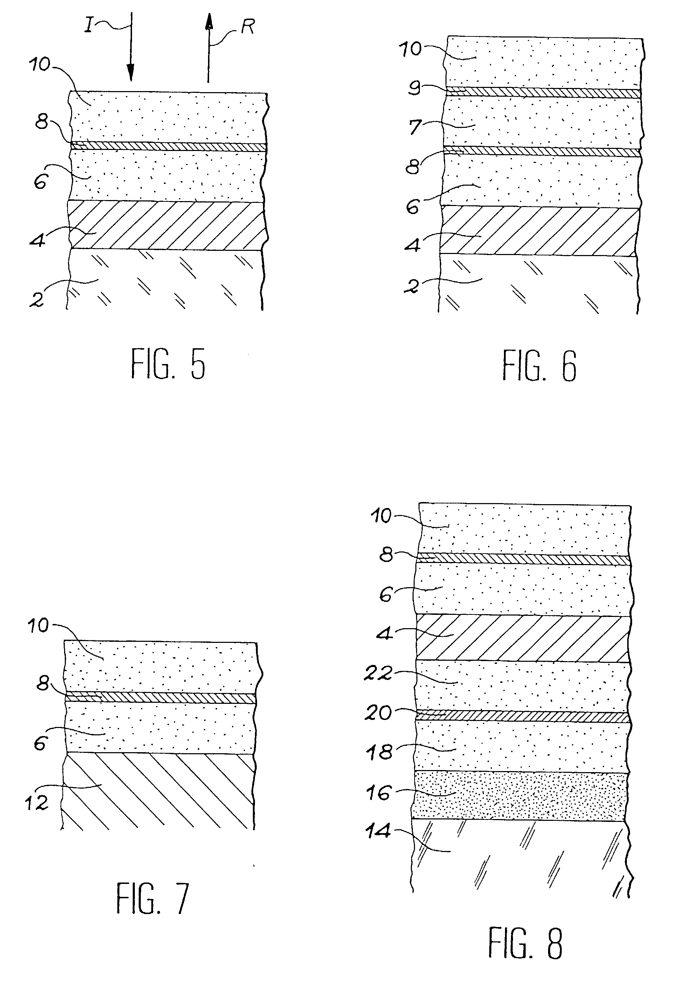

La figure 5 est une vue en coupe transversale schématique et partielle d'un revêtement conforme à l'invention.

Le revêtement de la figure 5 comprend successivement, sur un substrat 2, une couche de métal épaisse 4 dont l'épaisseur est de l'ordre de plusieurs dizaines de nanomètres, une couche d'alumine 6 dont l'épaisseur est de l'ordre de quelques dizaines de nanomètres, une couche d'aluminium mince, absorbante, optiquement discontinue 8, dont l'épaisseur est inférieure ou égale à 15 nm et une couche diélectrique 10.

Dans cet exemple, la lumière I pénètre dans le revêtement à travers la couche diélectrique 10.

Du fait de l'absorption dans le revêtement, la quantité de lumière réfléchie R est très faible.

En choisissant les épaisseurs de la couche diélectrique 10 et de la couche d'alumine, on est capable d'ajuster la réponse spectrale du revêtement absorbeur.

A titre d'exemple, on réalise un revêtement conforme à celui de la figure 5, parfaitement opaque et antireflet dans le domaine spectral allant de 450 nm à 950 nm, sur un substrat 2 en verre de type BK7 et on choisit une couche 4 en aluminium et une couche 10 en alumine et on donne aux couches 4, 6, 8 et 10 respectivement les épaisseurs 50 nm, 64 nm, 8 nm et 70 nm.

On obtient ainsi un revêtement dont l'absorption optique dans ce domaine spectral est supérieure ou égale à 98% et dont le coefficient de réflexion est inférieur ou égal à 2%.

Pour montrer l'intérêt d'un tel revêtement on a calculé l'absorption optique d'un revêtement identique à ceci près que la couche 8 de 8 nm d'épaisseur est supposée avoir les constantes optiques de l'aluminium massif.

Dans ces conditions on trouve que la discontinuité optique de la couche 8 permet d'augmenter l'absorption optique de 55% en moyenne.

On a mesuré la diffusion optique intégrée du revêtement conforme à l'invention de la figure 5 et l'on a trouvé 0,97% à la longueur d'onde 633 nm.

Par comparaison une peinture noire absorbante diffuse la lumière à un niveau typique de 5%.

Un autre revêtement plus absorbant conforme à l'invention est schématiquement représenté sur la figure 6 et diffère simplement de celui de la figure 5 par le fait qu'il comprend en outre, entre la couche 8 et la couche 10, une autre couche d'alumine 7, ayant par exemple une épaisseur de 64 nm et formée sur la couche 8, et une autre couche mince d'aluminium optiquement discontinue 9, ayant par exemple une épaisseur de 8 nm et formée sur la couche 7, la couche 10 étant alors formée sur la couche 9.

La couche d'aluminium 4 peut être remplacée par une couche opaque de chrome ayant par exemple une épaisseur de 70 nm.

Dans ces conditions l'absorption optique de la structure de la figure 5 par exemple est au moins égale à 98,7% dans la quasi-totalité du domaine spectral allant de 450 nm à 950 nm et l'on constate de plus que la réponse en réflexion du revêtement est peu sensible à l'angle d'incidence tant que ce dernier reste inférieur à 40°.

Certaines applications nécessitent le traitement de baffles métalliques pour limiter les réflexions parasites.

Ces baffles, qui sont par exemple en acier inoxydable ou en aluminium, peuvent être efficacement traitées par un revêtement conforme à l'invention.

Ceci est schématiquement illustré en coupe transversale par la figure 7 où une telle baffle a la référence 12.

On a formé sur cette baffle 12 l'empilement des trois couches 6, 8 et 10 dont il a été question dans la description de la figure 5.

Avec les épaisseurs mentionnées plus haut pour cet empilement on obtient un revêtement extrêmement mince de 142 nm d'épaisseur, ce qui limite les pertes optiques par diffusion et permet un traitement très adhérent de la tranche d'une baffle métallique, ce qui n'est pas le cas des traitements épais de type peinture noire.

Un autre revêtement conforme à l'invention est schématiquement représenté en coupe transversale sur la figure 8.

Ce revêtement de la figure 8 est formé sur un substrat 14 en saphir et comprend successivement, à partir de ce substrat 14, une couche 16 de TiO₂, une couche 18 d'alumine, une couche d'aluminium mince, optiquement discontinue 20, une couche 22 d'alumine puis la couche 4 en aluminium, la couche 6 d'alumine, la couche optiquement discontinue d'aluminium 8 et la couche d'alumine 10 dont il a été question dans la figure 5.

Dans l'exemple de la figure 8 les épaisseurs des couches 16, 18, 20, 22, 4, 6, 8 et 10 valent respectivement 26 nm, 20 nm, 8 nm, 83 nm, 50 nm, 64 nm, 8 nm et 70 nm.

La seconde partie de cet absorbeur représenté sur la figure 8 (couches 4 à 10 du côté de l'air) est identique à l'absorbeur de l'exemple de la figure 5 et la réponse optique du côté de l'air est donc la même.

Du côté du saphir, le coefficient de réflexion dans le saphir ne dépasse pas 3,5% entre 450 nm et 950 nm.

L'absorbeur de la figure 8 a une faible épaisseur de 338 nm et, du fait de cette faible épaisseur et des contraintes mécaniques limitées au niveau des matériaux utilisés, ce double absorbeur peut être gravé.

La présente invention permet avantageusement :
- l'obtention de revêtements multicouches très minces (d'épaisseurs inférieures à 0,25 µm) tout en étant très absorbants,
- l'obtention de revêtements totalement opaques (dont les pertes par absorption sont supérieures à 95%) sur une large gamme spectrale allant du domaine visible au domaine proche infrarouge, en particulier la gamme spectrale 450 nm-950 nm, tout en ayant des performances optiques très peu sensibles à l'angle d'incidence,
- l'obtention de revêtements absorbants dont les performances optiques et la largeur de gamme spectrale peuvent être ajustées par modification de l'empilement de leurs couches,
- l'obtention de revêtements très absorbants tout en étant faiblement diffusants (coefficient de diffusion inférieur à 1% dans le domaine visible) et
- l'obtention de revêtements très absorbants que l'on peut graver par un plasma ou par la technique « lift-off » du fait de l'utilisation de matériaux métalliques et diélectriques peu contraints comme l'aluminium et l'alumine.

Les documents qui sont mentionnés dans la présente description sont les suivants :
1. Demande de brevet européen n° 88300048, COUNCIL SCIE IND RES (1989).
2. JP 54133134, CANON KK (1979).
3. R.E. Laird, J.D. Wolfe and C.K. Carniglia, Proceedings of Optical Inferference Coatings Conference, Tucson, Juin 1995, p.364.
4. FR 2647259, THOMSON TUBES ELTRN (1989).
5. GB 2240204, SAMSUNG ELECTRONICS CO (1991).
6. EP 0716334A, AT&T CORP. (1996).
7. H.K. Pulker, « Coatings on glass », Thin Films Science and Technology, ELSEVIER (1984).
8. E.D. PALIK, Handbook of Optical Constants of Solids, Academic Press (1985).
9. W.P. Chen and J.M. Chen : « Use of surface plasma waves for determination of the thickness and optical constants of thin metallic films », Opt. Soc. Of America, vol.71, n°2, Fev. 1981.

## Revendications

1. Revêtement absorbeur de lumière dans un domaine spectral déterminé, contenu dans le domaine visible-proche infrarouge, ce revêtement étant formé sur un substrat (2, 12, 14) et caractérisé en ce qu'il comprend :
- au moins une couche de métal mince (8, 9, 20) qui est absorbante dans ce domaine spectral déterminé, et
- au moins une couche diélectrique (7, 10, 22), qui est transparente dans ce domaine spectral déterminé, cette couche diélectrique étant formée sur cette couche de métal mince,
et en ce que cette couche de métal mince est optiquement discontinue, son indice de réfraction et son coefficient d'extinction étant respectivement supérieur à l'indice de réfraction et inférieur au coefficient d'extinction du métal à l'état massif, dans ce domaine spectral déterminé.

2. Revêtement selon la revendication 1, comprenant au moins deux couches de métal minces, optiquement discontinues (8, 9), la couche diélectrique (10) étant formée sur celle de ces deux couches de métal minces qui est la plus éloignée du substrat (2).

3. Revêtement selon l'une quelconque des revendications 1 et 2, comprenant en outre, entre le substrat (2) et la couche de métal mince (8) la plus proche de ce substrat, une couche de métal épaisse, optiquement continue (4).

4. Revêtement selon l'une quelconque des revendications 1 et 2, comprenant successivement, à partir du substrat (14), une première couche diélectrique (16), une première couche de métal mince, optiquement discontinue (20), une deuxième couche
